# EUROPEAN PATENT SPECIFICATION

(11) **EP 1 271 887 B1**
(45) Date of publication and mention of the grant of the patent: **22.11.2006**
(21) Application number: 02013660.2
(22) Date of filing: 20.06.2002
(51) Int. Cl.: H04L 29/06, G07F 7/10

(54) **A system and method for transmitting data via a wireless connection in a secure manner**
System und Verfahren zur gesicherten Übertragung von Daten über eine drahtlosen Verbindung
Système et procédé pour la transmission sécurisée de données via une connection sans fil

(30) Priority: 29.06.2001 US 896636
(43) Date of publication of application: 02.01.2003
(73) Proprietor: Nokia Corporation, 02150 Espoo (FI)
(72) Inventor: Ikonen, Ari, 21280 Raisio (SE)
(74) Representative: Lindberg, Klas Valter Bo

(56) References cited:
- EP-A- 0 690 399
- WO-A-98/00968
- WO-A-98/43427
- US-A- 5 177 789

## Description

### FIELD OF THE INVENTION

This invention relates generally to wireless communications, and more particularly, to a system and method for enabling a user of a remote control device to transmit sensitive data over a wireless connection in a secure manner.

### BACKGROUND OF THE INVENTION

The use of infra-red and radio frequency remote controllers to control electronic equipment such as televisions, set-top boxes (cable or satellite), personal computers, garage door openers, automobile locks and the like is well known. An example can be found in the document WO 98/43427. One drawback to the use of such controllers is the ease in which their signals can be intercepted by unscrupulous individuals with what is termed an "electronic grabber" for unauthorized use at a later time. Thus, to the extent that sensitive data is transmitted using such remote controllers, absent safeguards, the transmission is anything but secure.

A known way of avoiding interception of such signals is to position the controller and the equipment close to one another and transfer sensitive data, at a power level lower than that normally used for transmitting other types of information. Since the power used to transmit the sensitive data is very low, it is difficult for a "grabber" to detect the data. However, having to place the remote controller and the equipment in close proximity of one another to avoid interception goes a long way toward eliminating the convenience associated with using a remote controller.

Another known way to prevent the interception of signals is for the remote controller to encode sensitive data with a code that is changed automatically in both the controller and the equipment. In this manner, an unauthorized user who is able to detect the transmitted signal is unable to access the equipment by reusing the same signal format. However, this technique requires the use of a specialized remote controller capable of performing the encoding process.

A technique for securely entering a PIN code for e.g. acquiring access to a secure system is disclosed e.g. in US 5,177,789. A code generating device is used to generate an encoded version of the PIN code, which is then entered into the system.

### SUMMARY OF THE INVENTION

The above-identified problems are solved and a technical advance is achieved in the art by providing a system and method for enabling a user to enter data over a wireless connection in a secure manner.

An exemplary method includes displaying rules for encoding data, receiving encoded data over a wireless connection and decoding the encoded data.

In another embodiment, an exemplary method includes viewing rules for encoding data, encoding the data in accordance with the rules and transmitting the encoded data over a wireless connection.

In an alternate embodiment, an exemplary method includes displaying rules for encoding a PIN, receiving an encoded PIN over a wireless connection from a remote controller, decoding the encoded PIN, validating the PIN and if the PIN is valid, authorizing an activity.

In yet another embodiment, an exemplary method includes viewing rules for encoding a PIN, encoding the PIN in accordance with the rules, transmitting the encoded PIN over a wireless connection and if said PIN is valid, engaging in an activity.

In still another embodiment, an exemplary method includes transmitting, for display, rules for using the wireless device to encode data transmitted over the wireless connection; receiving data encoded in accordance with the rules; and decoding the encoded data.

Thus, in accordance with the present invention, a user of a conventional remote control device is provided with a convenient mechanism for transmitting sensitive data over a wireless connection in a secure manner.

Other and further aspects of the present invention will become apparent during the course of the following description and by reference to the attached drawings.

### BRIEF DESCRIPTION OF THE DRAWINGS

FIG. 1 is a block diagram of an overview of an exemplary system for enabling a user of a remote control device to conduct secure transactions.
FIG.2 is a block diagram of an exemplary terminal device.
FIG. 3 is a flowchart illustrating an exemplary process by which the terminal device of FIG. 3 enables secure entry of a PIN.
FIGS. 4A-4C illustrate exemplary coding records generated during the process of FIG. 3.
FIGS. 5A-5E illustrate exemplary screens displayed to the user during the process of FIG. 3.

### DETAILED DESCRIPTION

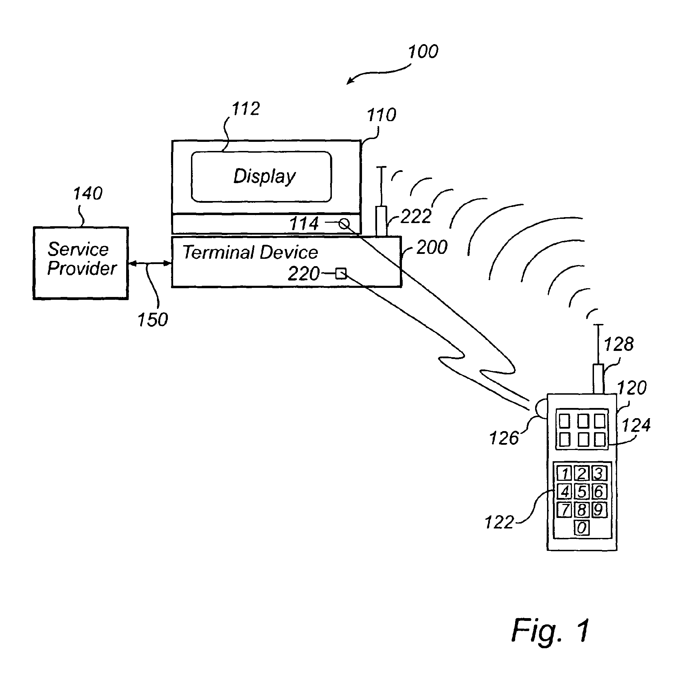

Referring now to FIG. 1, there is shown, in accordance with one embodiment of the present invention, a system 100 for enabling a user of a remote control device to conduct secure transactions.

As shown in FIG. 1, system 100 includes an electronic device 110, a remote controller 120 and a terminal device 200. The electronic device 110 may be a television with a set-top box, a personal computer, etc., or any device with a display 112, such as a cathode ray tube. Device 110 also includes an infrared receiver 114 for receiving conventional control commands from remote controller 120.

As further shown in FIG. 1, remote controller 120 includes a numeric key pad 122, function keys 124, infrared transmitter 126 and/or radio frequency transmitter 128. Transmitter 128 may be, for example, a low power radio frequency ("LPRF") transmitter such as a Bluetooth transmitter. In one embodiment, remote controller 120 uses infrared transmitter 126 to transmit conventional control commands (e.g., On, Off, Channel Up, Volume Down, etc.) to electronic device 110. A user employs numeric keypad 122 and function keys 124 to enter the control commands in a conventional manner.

Terminal device 200 of FIG. 1 includes a smart card-based application by which a user of remote controller 120 can conduct secure transactions with service provider 140. The smart card-based application may require the user to transmit a personal identification number ("PIN"), payment information and/or other sensitive data to terminal 200 for a variety of reasons including, but not limited to, ensuring that the transaction is authorized. The user transmits such data to terminal device 200 using either infrared transmitter 126 or radio frequency transmitter 128 of remote controller 120, depending upon the type of receiver employed by terminal 200 for this purpose. (As also shown in FIG. 1, terminal device 200 includes infrared and/or radio frequency receivers (220, 222) for receiving such information from controller 120.) The user employs numeric keypad 122 and function keys 124 to transmit sensitive data to terminal 200. Moreover, one of the function keys 124 can be predefined to permit switching transmissions between electronic device 110 and terminal 200.

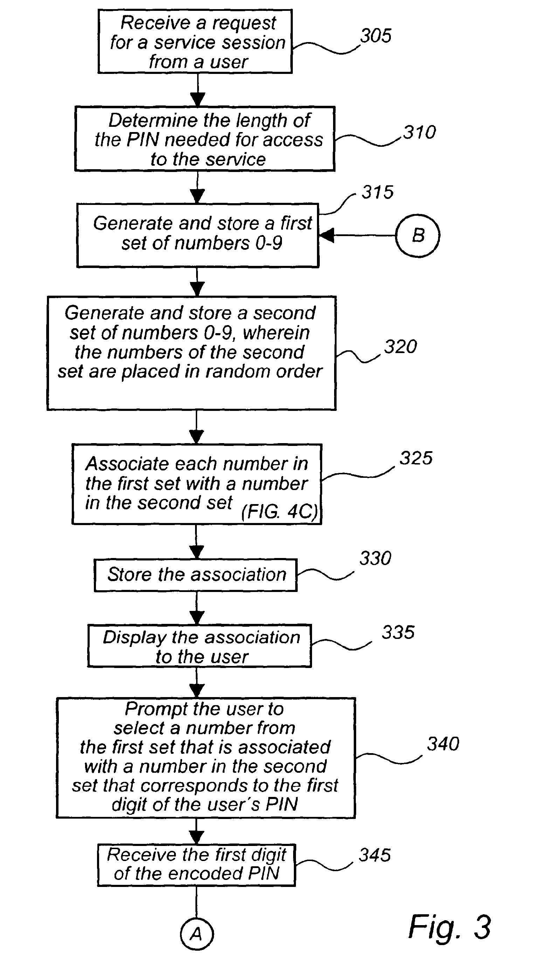

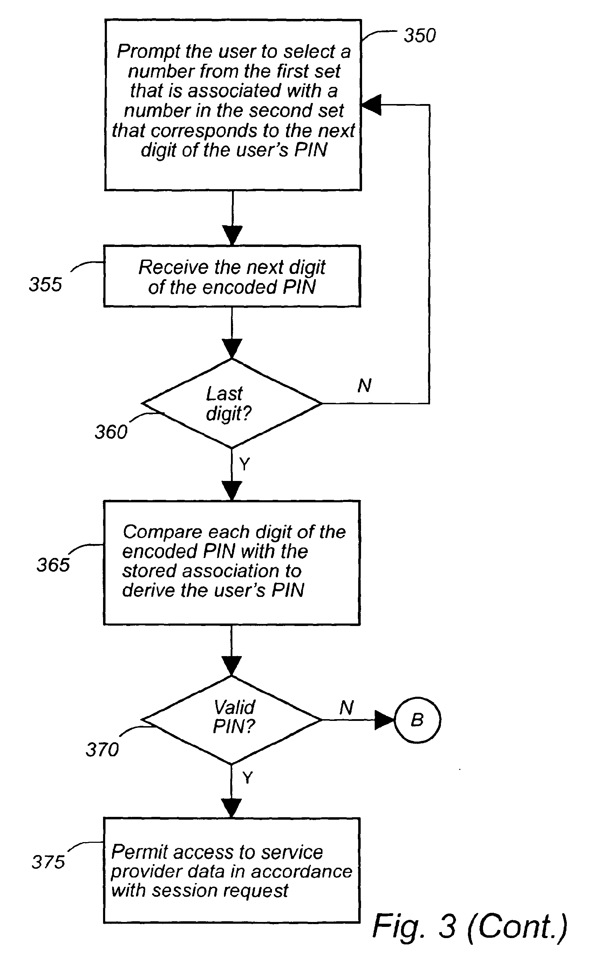

In accordance with the present invention, terminal 200 advantageously guides the user through the process of encoding sensitive data, prior to transmission to terminal 200, thereby ensuring that the transmission of such data is secure. Guidance is provided in the form of instructions and/or other information displayed to the user on display 112 of electronic device 110, as will be discussed in detail hereinafter in connection with FIG. 3. Thus, in accordance with the present invention, sensitive data can be transmitted in a secure manner from a standard remote controller 120, which otherwise does not have a mechanism for encoding data.

Once terminal 200 has decoded and validated the received PIN, the user is permitted to carry on the requested transaction with service provider 140. This may require the user to select from various application-specific options from display 112 relating to the transaction using remote controller 120. Such transactions may include purchasing goods or services over the Internet, purchasing a "Pay-Per-View" movie from a cable television operator, conducting electronic banking and the like, which typically involve transmitting payment information, such as a credit card number, to service provider 140. To this end, terminal device 200 is coupled to service provider 140 via a data connection 150 such as a cable television connection, an Internet connection, a wireless connection, or the like.

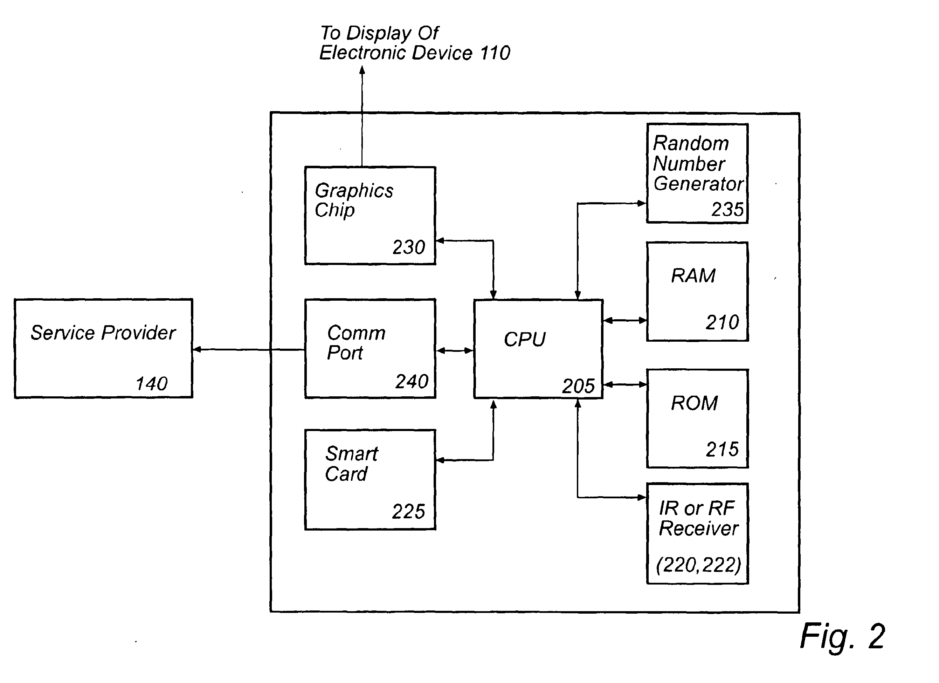

FIG. 2 is a block diagram of an exemplary terminal device 200. In one embodiment, terminal device 200 includes a CPU 205 together with associated memory (210, 215) for enabling a PIN and/or or other information necessary for conducting a secure transaction, to be transmitted by remote controller 200 over a wireless connection in a secure manner, as will be discussed in detail hereinafter in connection with FIG. 3.

As shown in FIG. 2, CPU 205 is also coupled to graphics chip 230 for interfacing with display 112 of electronic device 110 to display instructions to the user for use in encoding data, such as a PIN, for transmission to terminal 200. The displayed instructions are derived, in part, from data that CPU 205 receives from random number generator 235, as also will be discussed in detail hereinafter in connection with FIG. 3. CPU 205 is also coupled to an infrared or radio frequency receiver (220, 222) for receiving the encoded PIN and subsequent commands from remote controller 120. The user's PIN is pre-stored in smart card 225 of user terminal 200. It will be understood that smart card 225, being a detachable device, allows various users, each with their own smart card 225 having their own PIN pre-stored therein, to transmit information over a wireless connection in a secure manner via a "public" terminal 200, provided that the terminal also includes a mechanism for communicating with service provider 140. CPU 205 decodes the encoded PIN in accordance with the decoding rules stored in memory (210, 215). CPU 205 then validates the decoded PIN by comparing it with the PIN received from smart card 225. If the decoded PIN is a valid PIN, the user is provided access to service provider 140 via communications port 240.

In an alternate and perhaps even more secure embodiment, the hardware and software necessary for conducting secure transactions resides entirely within smart card 225 or other secure detachable device. In this alternate embodiment, the random number generator 230 resides in card 225 and both the receivers (220, 222) and graphics chip 230 are connected directly to card 225. In other words, all receiving, decoding and validating of PINs are performed by smart card 225 (i.e., the smart card's CPU and associated memory). In this way, information relating to the PIN is not shared with main CPU 205. Thus, in this embodiment, CPU 205 and associated memory (210, 215) are used only for conducting the requested transaction after it has been authorized by smart card 225.

In a yet another embodiment, all of the hardware and software necessary for conducting secure transactions in accordance with the present invention resides at service provide 140, rather than within terminal 200. Thus, in this embodiment, service provider 140 generates instructions and/or other information necessary to visually guide the user through the process of encoding the PIN. In this regard, service provider 140 transmits this information via data connection 150 to the terminal device 200 for presentation to the user on display 112. Also, all remote controller 120 commands needed for conducting secure transactions (e.g., encoded digits of a PIN) are transmitted to service provider 140 via terminal device 200. Thus, in this embodiment, decoding and validating of PINs is performed at service provider 140, rather than at terminal 200.

FIG. 3 is a flowchart illustrating an exemplary process by which terminal 200 enables a user of a remote control device to conduct secure transactions. In step 305 of FIG. 3, terminal 200 receives a request for a transaction from a user of remote controller 120. The user may transmit the request to terminal 200 over the infrared or RF connections, e.g., by depressing a function key 124 of controller 120 that has been pre-defined for this purpose. In step 310, terminal 200 determines the length of the PIN needed to conduct the requested transaction; more secure transactions may require entry of a longer PIN. It is to be understood that the data that can be transmitted in accordance with the present invention is not limited to PINS, but rather, can include any data sought to be transmitted in a secure manner over a wireless connection. Such data includes, but is not limited to, user account information or credit card numbers used to pay for goods or services that are the subject of the requested transaction.

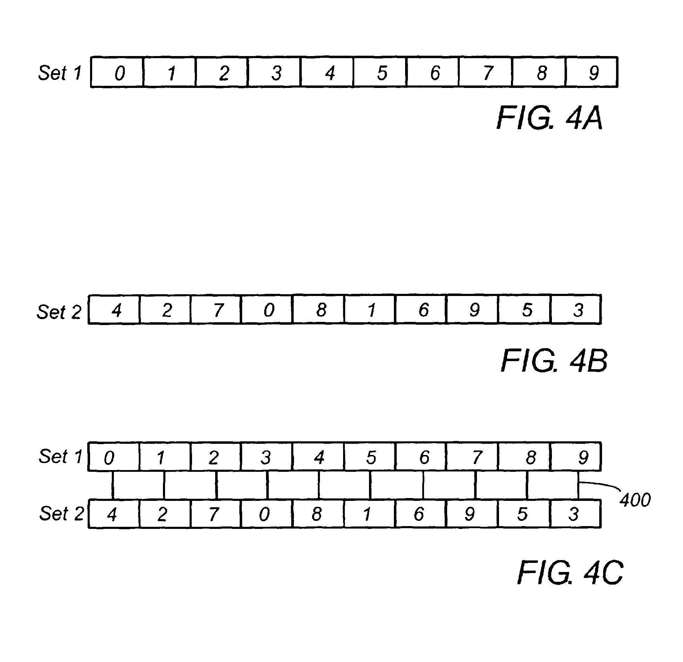

Steps 315-330 of FIG. 3 relate to an exemplary method for generating the encoding rules that will be displayed to the user to guide him through the process of encoding his PIN for secure transmission. These rules will also be stored by terminal 200 for decoding the encoded PIN received from the user. FIGS. 4A-C illustrate exemplary coding records generated during steps 315-330; thus, each of these figures is referenced below in connection with the discussion of these steps.

In step 315, terminal 200 generates and stores a first set of numbers 0-9. The first set of numbers is shown in FIG. 4A. In step 320, terminal 200 generates and stores a second set of numbers 0-9, wherein the numbers of the second set are placed in random order, as shown in FIG. 4B. The second set of numbers is generated using random number generator 230 in a manner well-known in the art. In step 325 of FIG. 3, terminal 200 associates each number in the first set with a number in the second set, as illustrated by the vertical lines in FIG. 4C. In step 330, terminal 200 stores this association for purposes of both displaying it to the user to guide him through the encoding process and thereafter using it to decode an encoded PIN received from the user.

It is to be understood that the above-described association is intended to be illustrative rather than limiting. For example, the first set of numbers, rather than, or in addition to, the second set of numbers, could also be randomly generated. Also, the association may include characters such as letters of the alphabet or symbols (e.g., %, &, etc.) rather than, or in addition to, numerals, provided that the remote controller 120 includes keys for transmitting such letters or symbols as the need arises.

In step 335, terminal 200 displays the association of FIG. 4C to the user. In step 340, the user is prompted to transmit a number from the first set of numbers that is associated with the number in the second set that corresponds to the first digit of the user's previously assigned or selected PIN. In step 345, terminal 400 receives the first encoded digit of the user's PIN. In step 350, terminal 200 prompts the user to transmit a number from the first set that is associated with the number in the second set that corresponds to the next digit of the user's PIN. In step 355, the next encoded digit of the PIN is received. In step 360, terminal 200 determines whether the digit received in step 350 was the last digit of the user's PIN. If the digit received was not the last digit, then steps 350 and 355 are repeated. If the digit received was the last digit, then, in step 365, terminal 200 decodes the encoded PIN by comparing each digit of the encoded PIN with the stored association.

In step 370, terminal 200 then determines whether the decoded PIN is a valid PIN. If the decoded PIN is a valid PIN, in step 375, terminal 200 provides the user with access to the requested transaction. If, however, it is determined in step 370 that the decoded PIN is not valid, then the process set forth in steps 315 through 370 is repeated in attempting to obtain a valid PIN from the user. Recall that steps 315-330 relate to generating the encoding rules displayed to the user. These rules are preferably changed whenever a re-attempt is made at obtaining a valid PIN or each time there is a new request for a transaction, as an added measure of security.

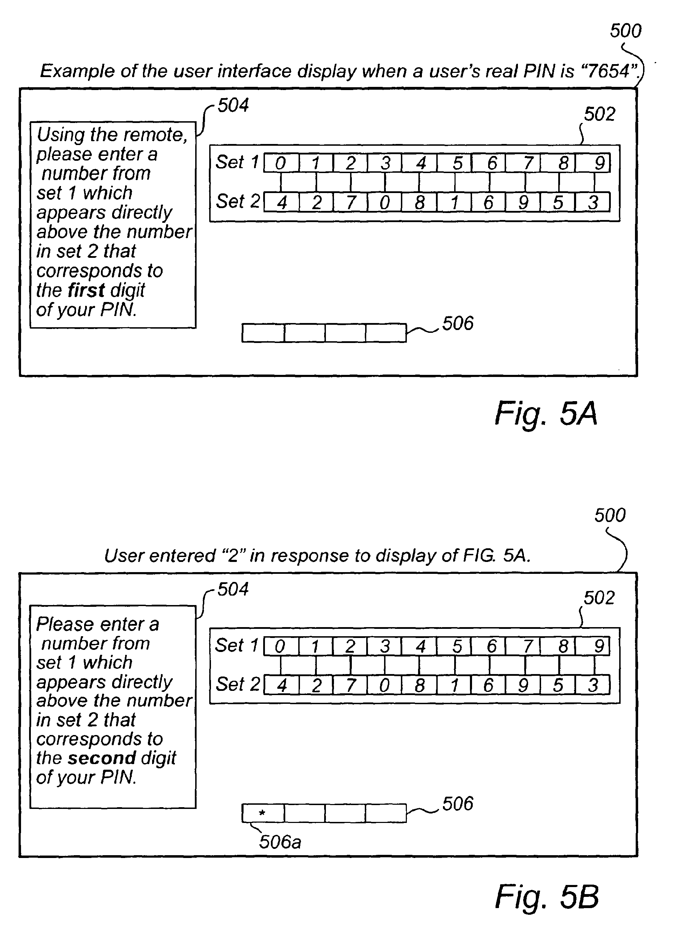

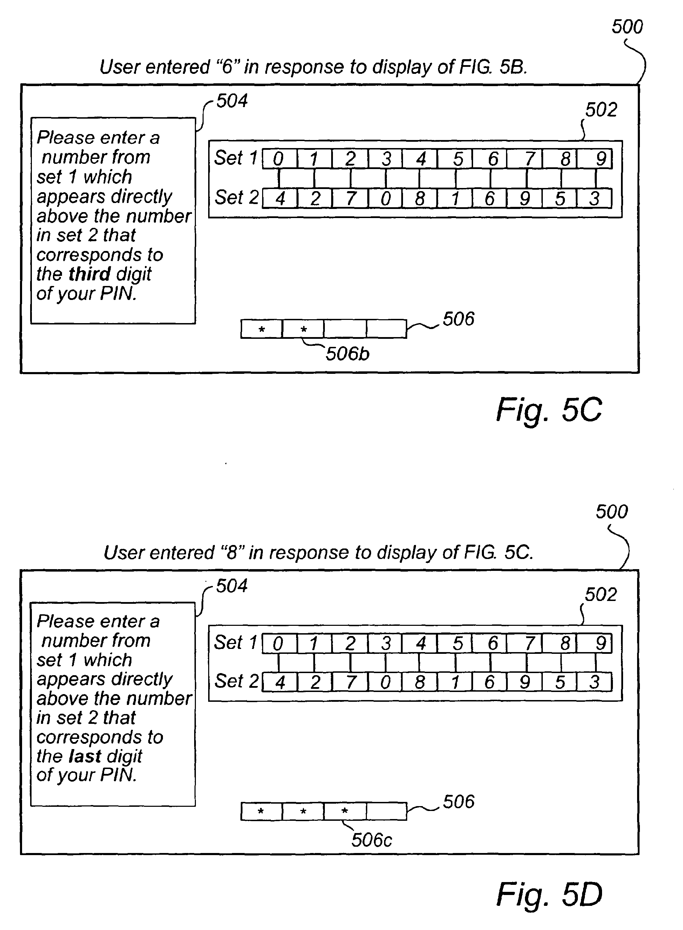

FIGS. 5A-5E illustrate an exemplary user interface displayed during the process of FIG. 3. For purposes of illustration, it is assumed that the user's PIN is "7654". FIG. 5A illustrates the first screen displayed to the user (i.e., before the user has transmitted any digits of an encoded PIN to terminal 200). As shown in FIG. 5A, the screen displayed to the user includes the association 502 between the first set of numbers and the second set of numbers generated by terminal 200, as discussed above in connection with FIG. 3. The screen also includes instructions 504 for using the displayed association to encode the first digit of the user's PIN. In particular, the instructions request the user to use remote controller 120 to enter a number from set 1 which appears directly above the number in set 2 that corresponds to the first digit of the user's PIN. The displayed association 502 together with the instructions 504 for using them are one example of rules for encoding a user's PIN. The user, knowing that his PIN is "7654", and viewing the on-screen association 502 between the first and second sets of numbers, will select the number "2". This is because the number "2" in the first set appears directly above the number "7" in the second set, which, in turn, corresponds to the first digit of his PIN. The user will then use remote controller 120 to transmit the number "2" to terminal 200 as the first digit of his encoded PIN. Screen 500 also includes fields 506 for providing the user with visual feedback that the transmitted digits have been received by terminal 200, as will become apparent in connection with the discussion of FIGS. 5B-5E.

FIG. 5B illustrates the second screen displayed to the user. As shown in FIG. 5B, the second screen contains substantially the same information as the first screen, except that an asterisk appears in field 506a to provide the user with visual feedback that the first digit has been received. It will be understood that the use of an asterisk in this manner is intended to be illustrative, rather than limiting, and that any mechanism for providing visual feedback may be employed. The only other difference between the first and second screens is that the second screen's instructions are directed to requesting entry of the second digit of the user's PIN, rather than the first digit, in accordance with the displayed association. Once again, since the user's PIN is "7654", the user will select and enter via remote controller 120, the number "6" from the first set of association 502 because it appears directly above the number "6" in the second set, which corresponds to the second digit of his PIN.

FIG. 5C illustrates the third screen displayed to the user. As shown in FIG. 5C, the third screen contains substantially the same information as the previous screens, except that an asterisk now appears in both fields 506a and 506b, indicating that the second digit transmitted has also been received. In addition, the third screen's instructions are directed to requesting entry of the third digit of the user's PIN in accordance with the displayed association. Since the user's PIN is "7654", the user will select and enter the number "8" from the first set of the displayed association because it appears directly above the number "5" in the second set, which corresponds to the third digit of his PIN.

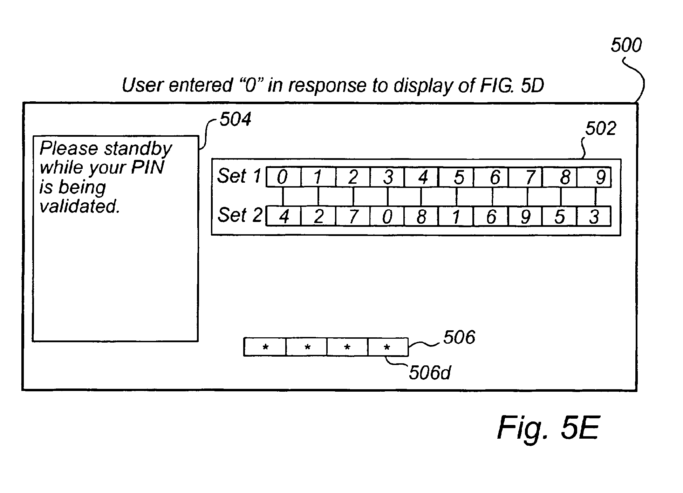

FIG. 5D illustrates the fourth screen displayed to the user. Asterisks now appear in fields 506a-c, indicating that the third digit transmitted has also been received. Also, the fourth screen's instructions are directed to requesting entry of the fourth digit of the user's PIN. The user will select the number "0" from the first set of the displayed association because it appears directly above the number "4" in the second set, which corresponds to the fourth and final digit of his PIN.

FIG. 5E illustrates the last screen displayed to the user. Asterisks now appear in all fields 506a-d, indicating that all four digits of the user's PIN have been received. The last screen's instructions are directed to requesting that the user stand by while the user's PIN is validated. As discussed above in connection with FIG. 3, if the decoded PIN is valid, the user is provided with access to the requested service/transaction. If, however, it is determined that the decoded PIN is not valid, then a screen indicating such may be displayed and, thereafter, the first screen of FIG. 5A may be re-displayed to request re-entry of an encoded PIN in accordance with a newly generated association 502 (i.e., the association is changed each time by terminal 200 as an added measure of security).

The many features and advantages of the present invention are apparent from the detailed specification, and thus, it is intended by the appended claims to cover all such features and advantages of the invention which fall within the scope of the invention.

Furthermore, since numerous modifications and variations will readily occur to those skilled in the art, it is not desired that the present invention be limited to the exact construction and operation illustrated and described herein, and accordingly, all suitable modifications and equivalents which may be resorted to are intended to fall within the scope of the claims. For example, it is to be understood that the above-described hardware and functionality of electronic device 110 and terminal device 120 could be combined into a single device without departing from the scope of the present invention.

## Claims

1. A method for enabling reception of data from a remote unit (120) at a terminal (200) in a secure manner over a wireless connection, in order to avoid unauthorized interception of data, comprising the terminal (200) performing the steps of:
displaying, on a display unit (112), rules for encoding data, said rules comprising at least two sets of characters (502), the characters in a first set being associated with the characters in a second set;
receiving encoded data from the remote unit (120) over a wireless connection; and
decoding the encoded data in accordance with the encoding rules displayed on the display (112), by replacing in the encoded data each character from the second set with an associated character in the first set.

2. A method for enabling transmission of data from a remote unit (120) to a terminal (200) in a secure manner over a wireless connection, in order to avoid unauthorized interception of data, comprising:
viewing rules for encoding data, displayed on a display (112) by said terminal (200), said rules comprising at least two sets of characters (502), the characters in a first set being associated with the characters in a second set;
encoding the data in accordance with the rules viewed on the display (112) when entering said data on the remote unit (120) by replacing in the data each character from the first set with an associated character in the second set; and
transmitting the encoded data over the wireless connection from said remote unit (120) to said terminal (200).

3. The method according to claim 1 or 2, wherein the characters in said second set are randomly arranged.

4. The method according to claim 1 or 2, wherein said rules are displayed on a display (112) of the terminal (200).

5. The method according to claim 1 or 2, wherein the display (112) forms part of a device (110) selected from the group consisting of a television, a personal computer, and a secured user interface.

6. The method according to claim 5, wherein the remote control unit (120) is used to operate the device (110) on whose display the rules are displayed.

7. The method of any one of the preceding claims, wherein the encoded data includes digits selected from the group consisting of numeric, alphabetic and symbolic characters.

8. The method of claim 7, wherein the data comprises a personal identification number ("PIN").

9. The method of claim 8, wherein the data comprises payment information.

10. The method of any one of the preceding claims, wherein the rules are automatically changed in a predetermined manner.

11. The method of any one of the preceding claims, wherein the wireless connection is an infrared or radio frequency wireless connection.

12. The method of claim 11, wherein the radio frequency wireless connection is a low power radio frequency ("LPRF") connection.

13. The method of claim 12, wherein the LPRF connection is a Bluetooth connection.

14. The method of claim 8, further comprising:
validating the PIN at said terminal (200); and
if the PIN is valid, permitting the user to engage in an activity.

15. The method of claim 14, wherein the step of validating comprises:
determining whether the PIN matches a PIN stored in a smart card.

16. A device for enabling a user of a remote control device (120) to transmit data in a secure manner over a wireless connection, comprising:
means (112) for displaying rules for encoding data, said rules comprising at least two sets of characters (502), the characters in a first set being associated with the characters in a second set;
means (114) for receiving encoded data over a wireless connection; and
processing means for decoding the encoded data in accordance with the displayed encoding rules, by replacing in the encoded data each character from the second set with an associated character in the first set

17. The device of claim 16, further comprising processing means for validating the decoded data.

18. The device of one of claims 16 or 17, wherein the data comprises a PIN.

19. The device of claim 18, wherein said processing means are arranged to:
decode the encoded PIN;
validate the PIN; and
if said PIN is valid, permit access to an activity.

20. The device of one of claims 16 - 19, wherein said processing means comprises a memory (210, 215) for storing a program, and a processor (205) in communication with the memory.

21. The device of claim 20, wherein the memory device and processor reside within a smart card (225).

22. The device of one of claims 16 - 21, further comprising means for generating a set of random characters, and associating said random set with a set of usable characters.

23. The device according to claim 22, wherein said processing means are arranged to decode said encoded data using the stored association.

24. The device of one of claims 16 - 23, incorporated into a TV set-top box.

25. A system for enabling a user to transmit data in a secure manner over a wireless connection, comprising a device according to one of claims 16 - 24, and a remote control device (120) for transmitting said data to said device.

## Patentansprüche

1. Verfahren, den sicheren Empfang von Daten von einer entfernt befindlichen Einheit (120) bei einem Endgerät (200) über eine drahtlose Verbindung zu ermöglichen, um unerlaubtes Abfangen von Daten zu vermeiden, wobei das Endgerät (200), das die Schritte ausführt, umfasst:
Anzeige von Regeln für die Datenkodierung auf einer Bildschirmeinheit (112), wobei die Regeln zumindest zwei Zeichensätze (502) umfassen und die Zeichen in einem ersten Satz den Zeichen in einem zweiten Satz zugeordnet werden;
Empfang koiderter Daten von der entfernt befindlichen Einheit (120) über eine drahtlose Verbindung; und
Dekodierung der kodierten Daten in Übereinstimmung mit den auf dem Bildschirm (112) angezeigten Kodierregeln, indem in den kodierten Daten jedes Zeichen vom zweiten Satz durch ein zugeordnetes Zeichen im ersten Satz ersetzt wird.

2. Verfahren, die sichere Übertragung von Daten von einer entfernt befindlichen Einheit (120) über eine drahtlose Verbindung zu einem Endgerät (200) zu ermöglichen, um ein unerlaubtes Abfangen von Daten zu vermeiden, umfassend:
Betrachtung der durch das Endgerät (200) auf einem Bildschirm (112) angezeigten Regeln für die Kodierung von Daten, wobei die Regeln zumindest zwei Sätze von Zeichen (502) umfassen und die Zeichen in einem ersten Satz den Zeichen in einem zweiten Satz zugeordnet sind;
Kodierung der Daten in Übereinstimmung mit den auf dem Bildschirm (112) betrachteten Regeln bei Eingabe dieser Daten auf der entfernt befindlichen Einheit (120), indem in den Daten jedes Zeichen aus dem ersten Satz durch ein zugehöriges Zeichen im zweiten Satz ersetzt wird; und
Übertragung der kodierten Daten über die drahtlose Verbindung von der entfernt befindlichen Einheit (120) zum Endgerät (200).

3. Verfahren nach Anspruch 1 oder 2, **dadurch gekennzeichnet, dass** die Zeichen im zweiten Satz zufallsbedingt angeordnet sind.

4. Verfahren nach Anspruch 1 oder 2, **dadurch gekennzeichnet, dass** die Regeln auf einem Bildschirm (112) des Endgeräts (200) angezeigt werden.

5. Verfahren nach Anspruch 1 oder 2, **dadurch gekennzeichnet, dass** der Bildschirm (112) einen Teil eines Geräts (110) bildet, das aus der Gruppe von Fernseher, Personalcomputer und einer gesicherten Benutzerschnittfläche ausgewählt ist.

6. Verfahren nach Anspruch 5, **dadurch gekennzeichnet, dass** die Fembedienungseinheit (120) verwendet wird, das Gerät (110) zu bedienen, auf dessen Bildschirm die Regeln angezeigt werden.

7. Verfahren nach einem der vorangehenden Ansprüche, **dadurch gekennzeichnet, dass** die kodierten Daten Zeichen umfassen, die aus der Gruppe von Zahlen-, Buchstaben- und Symbolzeichen ausgewählt werden.

8. Verfahren nach Anspruch 7, **dadurch gekennzeichnet, dass** die Daten eine persönliche Kennzahl ("PIN") umfassen.

9. Verfahren nach Anspruch 8, **dadurch gekennzeichnet, dass** die Daten Zahlungsinformation umfassen.

10. Verfahren nach einem der vorangehenden Ansprüche, **dadurch gekennzeichnet, dass** die Regeln in einer vorbestimmten Weise automatisch verändert werden.

11. Verfahren nach einem der vorangehenden Ansprüche, **dadurch gekennzeichnet, dass** die drahtlose Verbindung eine drahtlose Infrarot- oder Hochfrequenzverbindung ist.

12. Verfahren nach Anspruch 11, **dadurch gekennzeichnet, dass** die drahtlose Hochfrequenzverbindung eine Low-Power-Hochfrequenz- ("LPRF") verbindung ist.

13. Verfahren nach Anspruch 12, **dadurch gekennzeichnet, dass** die LPRF-Verbindung eine Bluetooth-Verbindung ist.

14. Verfahren nach Anspruch 8, weiter umfassend:
Validierung der PIN am Endgerät (200); und
wenn die PIN gültig ist, Erlaubnis für den Benutzer, eine Aktivität wahrzunehmen.

15. Verfahren nach Anspruch 14, **dadurch gekennzeichnet, dass** der Validierungsschritt umfasst:
Ermittlung, ob die PIN mit einer in einer Chipkarte gespeicherten PIN übereinstimmt.

16. Vorrichtung, den Benutzer einer Fernbedienungsvorrichtung (120) in die Lage zu versetzen, Daten sicher über eine drahtlose Verbindung zu übermitteln, umfassend:
Mittel (112) zur Anzeige von Regeln für die Kodierung von Daten, wobei die Regeln zumindest zwei Sätze von Zeichen (502) umfassen und die Zeichen in einem ersten Satz den Zeichen in einem zweiten Satz zugeordnet sind;
Mittel (114) zum Empfang kodierter Daten über eine drahtlose Verbindung; und
Verarbeitungsmittel für die Dekodierung der kodierten Daten in Übereinstimmung mit den angezeigten Kodierregeln, indem in den kodierten Daten jedes Zeichen vom zweiten Satz durch ein zugeordnetes Zeichen im ersten Satz ersetzt wird.

17. Vorrichtung nach Anspruch 16, weiter Verarbeitungsmittel für die Validierung der dekodierten Daten umfassend.

18. Vorrichtung nach einem der Ansprüche 16 oder 17, **dadurch gekennzeichnet, dass** die Daten eine PIN umfassen.

19. Vorrichtung nach Anspruch 18, **dadurch gekennzeichnet, dass** die Verarbeitungsmittel ausgelegt sind, um:
die kodierte PIN zu dekodieren;
die PIN zu validieren; und
wenn die PIN gültig ist, Zugang zu einer Aktivität zu gewähren.

20. Vorrichtung nach einem der Ansprüche 16 bis 19, **dadurch gekennzeichnet, dass** die Verarbeitungsmittel einen Speicher (210, 215) für die Speicherung eines Programms sowie einen Prozessor (205) in Kommunikation mit dem Speicher umfassen.

21. Vorrichtung nach Anspruch 20, **dadurch gekennzeichnet, dass** sich die Speichervorrichtung und der Prozessor innerhalb einer Chipkarte (225) befinden.

22. Vorrichtung nach einem der Ansprüche 16 bis 21, weiter Mittel umfassend, um einen Satz von Zufallszeichen zu erzeugen und den zufallsbedingten Satz einem Satz von verwendbaren Zeichen zuzuordnen.

23. Vorrichtung nach Anspruch 22, **dadurch gekennzeichnet, dass** die Verarbeitungsmittel ausgelegt sind, um unter Verwendung der gespeicherten Zuordnung die kodierten Daten zu dekodieren.

24. Vorrichtung nach einem der Ansprüche 16 bis 23, in die Set-Top-Box eines Fernsehers eingebaut.

25. System, einen Benutzer in die Lage zu versetzen, Daten sicher über eine drahtlose Verbindung zu übermitteln, eine Vorrichtung nach einem der Ansprüche 16 bis 24 sowie eine Fernbedienungsvorrichtung (120) für die Übermittlung der Daten zu der Vorrichtung umfassend.

## Revendications

1. Procédé pour activer la réception de données provenant d'une unité distante (120) vers un terminal (200) de manière sécurisée sur une connexion sans fil, afin d'éviter une interception non autorisée des données, comprenant le terminal (200) effectuant les étapes consistant à :
afficher, sur une unité d'affichage (112), des règles pour coder des données, lesdites règles comprenant au moins deux ensembles de caractères (502), les caractères dans un premier ensemble étant associés aux caractères dans un deuxième ensemble ;
recevoir des données codées provenant de l'unité distante (120) sur une connexion sans fil ; et
décoder les données codées conformément aux règles de codage affichées sur l'écran (112), en remplaçant dans les données codées chaque caractère provenant du deuxième ensemble par un caractère associé dans le premier ensemble.

2. Procédé pour activer l'émission de données provenant d'une unité distante (120) vers un terminal (200) de manière sécurisée sur une connexion sans fil, afin d'éviter une interception non autorisée des données, comprenant :
visualiser des règles pour coder des données, affichées sur un écran (112) par ledit terminal (200), lesdites règles comprenant au moins deux ensembles de caractères (502), les caractères dans un premier ensemble étant associés aux caractères dans un deuxième ensemble ;
coder les données conformément aux règles visualisées sur l'écran (112) lors de l'entrée desdites données sur l'unité distante (120) en remplaçant dans les données chaque caractère provenant du premier ensemble par un caractère du deuxième ensemble ; et
transmettre les données codées sur la connexion sans fil provenant de ladite unité distante (120) vers ledit terminal (200).

3. Procédé selon la revendication 1 ou 2, dans lequel les caractères dans ledit deuxième ensemble sont placés de manière aléatoire.

4. Procédé selon la revendication 1 ou 2, dans lequel lesdites règles sont affichées sur un écran (112) du terminal (200).

5. Procédé selon la revendication 1 ou 2, dans lequel l'écran (112) forme une partie d'un dispositif (110) sélectionné dans le groupe constitué d'une télévision, d'un ordinateur personnel et d'une interface utilisateur sécurisée.

6. Procédé selon la revendication 5, dans lequel l'unité de télécommande (120) est utilisée pour faire fonctionner le dispositif (110) sur l'écran duquel les règles sont affichées.

7. Procédé selon l'une quelconque des revendications précédentes, dans lequel les données codées incluent des chiffres sélectionnés dans le groupe constitué de caractères numériques, alphabétiques et symboliques.

8. Procédé selon la revendication 7, dans lequel les données comprennent un numéro d'identification personnel (PIN : *Personal Identification Number*).

9. Procédé selon la revendication 8, dans lequel les données comprennent des informations sur le paiement.

10. Procédé selon l'une quelconque des revendications précédentes, dans lequel les règles sont modifiées automatiquement d'une façon prédéterminée.

11. Procédé selon l'une quelconque des revendications précédentes, dans lequel la connexion sans fil est une connexion sans fil infrarouge ou radiofréquence.

12. Procédé selon la revendication 11, dans lequel la connexion sans fil radiofréquence est une connexion radiofréquence de faible puissance (LPRF : *Low Power Radio Frequency).*

13. Procédé selon la revendication 12, dans lequel la connexion LPRF est une connexion Bluetooth.

14. Procédé selon la revendication 8, comprenant en outre :
valider le PIN dans ledit terminal (200) ; et
si le PIN est valide, permettre à l'utilisateur de prendre part à une activité.

15. Procédé selon la revendication 14, dans lequel l'étape consistant à valider comprend :
déterminer si le PIN correspond à un PIN stocké dans une carte à puce.

16. Dispositif pour permettre à un utilisateur d'un dispositif de télécommande (120) de transmettre des données de manière sécurisée sur une connexion sans fil, comprenant :
un moyen (112) pour afficher des règles pour coder des données, lesdites règles comprenant au moins deux ensembles de caractères (502), les caractères dans un premier ensemble étant associés aux caractères dans un deuxième ensemble ;
un moyen (114) pour recevoir des données codées sur une connexion sans fil ; et
un moyen de traitement pour décoder les données codées conformément aux règles de codage affichées, en remplaçant dans les données codées chaque caractère provenant du deuxième ensemble par un caractère associé dans le premier ensemble.

17. Dispositif selon la revendication 16, comprenant en outre un moyen de traitement pour valider les données décodées.

18. Dispositif selon l'une des revendications 16 ou 17, dans lequel les données comprennent un PIN.

19. Dispositif selon la revendication 18, dans lequel ledit moyen de traitement est arrangé pour :
décoder le PIN codé;
valider le PIN ; et
si ledit PIN est valide, permettre l'accès à une activité.

20. Dispositif selon l'une des revendications 16 à 19, dans lequel ledit moyen de traitement comprend une mémoire (210, 215) pour stocker un programme, et un processeur (205) en communication avec la mémoire.

21. Dispositif selon la revendication 20, dans lequel le dispositif de mémoire et le processeur résident à l'intérieur d'une carte à puce (225).

22. Dispositif selon l'une des revendications 16 à 21, comprenant en outre un moyen pour générer un ensemble de caractères aléatoires, et associer ledit ensemble aléatoire à un ensemble de caractères utilisables.

23. Dispositif selon la revendication 22, dans lequel ledit moyen de traitement est arrangé pour décoder lesdites données codées en utilisant l'association stockée.

24. Dispositif selon l'une des revendications 16 à 23, intégré dans un boîtier décodeur de télévision.

25. Système pour permettre à un utilisateur de transmettre des données de manière sécurisée sur une connexion sans fil, comprenant un dispositif selon l'une des revendications 16 à 24, et un dispositif de télécommande (120) pour transmettre lesdites données audit dispositif.
